# EUROPEAN PATENT APPLICATION

(11) **EP 1 885 053 A2**
(43) Date of publication of application: **06.02.2008**
(21) Application number: 07252920.9
(22) Date of filing: 24.07.2007
(51) Int. Cl.: H02M 3/335

(54) **Power supply circuit**

(30) Priority: 01.08.2006 JP 2006210105
(71) Applicant: Mitsumi Electric Co., Ltd., Tama-shi, Tokyo 206-8567 (JP)
(72) Inventor: Sasaki, Dai, Iizuka-Shi, Fukuoka 820-8533 (JP); Matsuo, Shinya, Iizuka-Shi, Fukuoka 820-8533 (JP)
(74) Representative: Vinsome, Rex Martin

(57) **Abstract**

A disclosed power supply circuit includes a transformer including a primary coil and a secondary coil; a primary circuit connected to the primary coil; a secondary circuit connected to the secondary coil; a photocoupler including a light-receiving element and a light-emitting element, the photocoupler coupling the primary circuit and the secondary circuit; and a breakdown element connected in parallel with the light-receiving element or the light-emitting element. The breakdown element is configured to break down at or above a first voltage that is lower than a second voltage at or above which the light-receiving element or the light-emitting element breaks down and thereby to cause a short-circuit between terminals of the light-receiving element or the light-emitting element.

## Description

### BACKGROUND OF THE INVENTION

### 1. Field of the Invention

The present invention generally relates to a power supply circuit. More particularly, this invention relates to a power supply circuit where a primary circuit connected to a primary coil of a transformer and a secondary circuit connected to a secondary coil of the transformer are coupled by a photocoupler.

### 2. Description of the Related Art

Normally, a switched-mode power supply is used for an AC adaptor that converts an alternating current from, for example, a power line to a direct current and supplies the direct current to a device (see, for example, patent document 1).

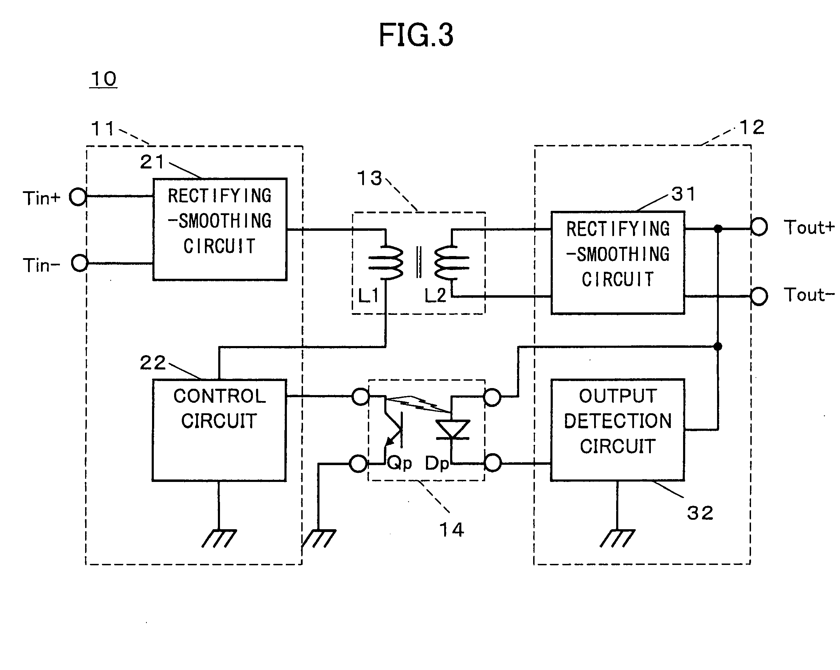

FIG. 3 is a circuit diagram illustrating an exemplary conventional switched-mode power supply circuit.

A switched-mode power supply circuit 10 shown in FIG. 3 includes a primary circuit 11, a secondary circuit 12, a transformer 13, and a photocoupler 14.

The primary circuit 11 includes a rectifying-smoothing circuit 21 and a control circuit 22. An alternating voltage is applied to input terminals Tin+ and Tin- of the primary circuit 11. The rectifying-smoothing circuit 21 rectifies and smoothes the alternating voltage applied to the input terminals Tin+ and Tin- and applies the smoothed voltage to one end of a primary coil L1 of the transformer 13. The other end of the primary coil L1 of the transformer 13 is connected to the control circuit 22. The control circuit 22 switches on and off the current flowing through the primary coil L1 at a duty cycle or a frequency corresponding to a detection signal supplied from the photocoupler 14

As a result, a voltage corresponding to the duty cycle or the frequency of the current flowing through the primary coil L1 appears at the ends of a secondary coil L2 of the transformer 13. The secondary coil L2 of the transformer 13 is connected to the secondary circuit 12. The secondary circuit 12 includes a rectifying-smoothing circuit 31 and an output detection circuit 32. The rectifying-smoothing circuit 31 rectifies and smoothes the voltage appearing at both ends of the secondary coil L2 of the transformer 13 and outputs the voltage from output terminals Tout+ and Tout-.

The output detection circuit 32 detects the voltage output from the output terminal Tout+, generates a detection signal corresponding to the output voltage, and thereby controls the photocoupler 14.

The photocoupler 14 includes a light-emitting diode Dp and a phototransistor Qp. The light-emitting diode Dp is driven according to the detection signal from the output detection circuit 32 and emits an amount of light corresponding to the detection signal. The light emitted from the light-emitting diode Dp enters the phototransistor Qp. The phototransistor Qp draws an amount of current corresponding to the amount of light from the control circuit 22.

The control circuit 22 switches on and off the current flowing through the primary coil L1 at a duty cycle or a frequency corresponding to the current drawn by the phototransistor Qp. In other words, the control circuit 22 switches on and off the current flowing through the primary coil L1 according to the detection signal from the output detection circuit 32 such that a constant voltage is output from the output terminals Tout+ and Tout-.

Thus, the switched-mode power supply circuit 10 outputs a constant voltage from the output terminals Tout+ and Tout-.
[Patent document 1] Japanese Patent Application Publication No. 2001-251850

One problem with a conventional power supply circuit is that when an electrical breakdown occurs in a photocoupler (the photocoupler "breaks down"), the light-receiving element and the light-emitting element of the photocoupler short-circuit and insulation between the primary circuit and the secondary circuit may break down.

### SUMMARY OF THE INVENTION

The present invention provides a power supply circuit that substantially obviates one or more problems caused by the limitations and disadvantages of the

### related art.

Embodiments of the present invention provide a power supply circuit where a short circuit between a light-receiving element and a light-emitting element of a photocoupler is prevented and insulation between a primary circuit and a secondary circuit is maintained.

According to an embodiment of the present invention, a power supply circuit includes a transformer including a primary coil and a secondary coil; a primary circuit connected to the primary coil; a secondary circuit connected to the secondary coil; a photocoupler including a light-receiving element and a light-emitting element, the photocoupler coupling the primary circuit and the secondary circuit; and a breakdown element connected in parallel with the light-receiving element or the light-emitting element; wherein the breakdown element is configured to break down at or above a first voltage that is lower than a second voltage at or above which the light-receiving element or the light-emitting element breaks down and thereby to cause a short-circuit between terminals of the light-receiving element or the light-emitting element.

### BRIEF DESCRIPTION OF THE DRAWINGS

FIG. 1 is a circuit diagram illustrating a power supply circuit according to an embodiment of the present invention;
FIG. 2 is a circuit diagram illustrating a power supply circuit according to another embodiment of the present invention; and
FIG. 3 is a circuit diagram illustrating an exemplary conventional power supply circuit.

### DESCRIPTION OF THE PREFERRED EMBODIMENTS

Preferred embodiments of the present invention are described below with reference to the accompanying drawings.

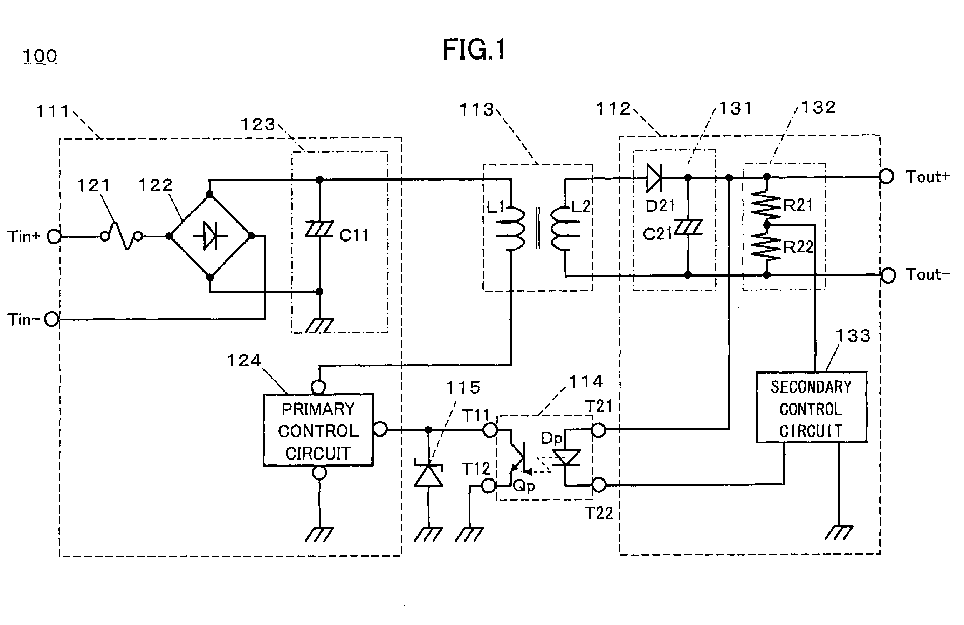

FIG. 1 is a circuit diagram illustrating a power supply circuit according to an embodiment of the present invention.

A power supply circuit 100 of this embodiment includes a primary circuit 111, a secondary circuit 112, a transformer 113, a photocoupler 114, and a breakdown element 115.

The primary circuit 111 is connected to a primary coil L1 of the transformer 113 and includes a fuse 121, a diode rectifier circuit 122, a smoothing circuit 123, and a primary control circuit 124.

An alternating voltage is applied between input terminals Tin+ and Tin-. The input terminal Tin+ is connected via the fuse 121 to the anode terminal of the diode rectifier circuit 122. The input terminal Tin-is connected directly to the cathode terminal of the diode rectifier circuit 122.

The diode rectifier circuit 122 comprises a diode bridge circuit and rectifies the alternating voltage applied between the input terminals Tin+ and Tin-. The voltage rectified by the diode rectifier circuit 122 is applied to the smoothing circuit 123. The smoothing circuit 123 comprises a capacitor C11. The capacitor C11 is connected between output paths of the diode rectifier circuit 122. The capacitor C11 smoothes the voltage rectified by the diode rectifier circuit 122 and applies the smoothed voltage to one end of the primary coil L1 of the transformer 113.

The other end of the primary coil L1 of the transformer 113 is connected to the primary control circuit 124. The primary control circuit 124 controls the electric current flowing through the primary coil L1 of the transformer 113 according to a detection signal supplied from the photocoupler 114. As a result, a voltage corresponding to the detection signal appears at a secondary coil L2 of the transformer 113. The secondary coil L2 is connected to the secondary circuit 112.

The secondary circuit 112 includes a rectifying-smoothing circuit 131, an output voltage detection circuit 132, and a secondary control circuit 133.

The rectifying-smoothing circuit 131 includes a diode D21 and a capacitor C21. The anode of the diode D21 is connected to one end of the secondary coil L2 and the cathode is connected to an output terminal Tout+. The diode D21 rectifies the voltage appearing at the secondary coil L2. The capacitor C21 is connected between output terminals Tout+ and Tout- and smoothes the output voltage.

The output voltage detection circuit 132 is connected between the output terminals Tout+ and Tout-. The output voltage detection circuit 132 includes resistors R21 and R22 connected in series between the output terminals Tout+ and Tout-.

A node between the resistors R21 and R22 is connected to the secondary control circuit 133. With the above configuration, the output voltage detection circuit 132 obtains a fraction of the output voltage applied between the output terminals Tout+ and Tout-using the resistors R21 and R22 and supplies the fraction of the output voltage (detected voltage) to the secondary control circuit 133.

The secondary control circuit 133 is connected to the photocoupler 114 and controls the photocoupler 114 according to the detected voltage supplied from the output voltage detecting circuit 132.

The photocoupler 114 is implemented as a chip where a light-emitting diode Dp that is a light-emitting element and a phototransistor Qp that is a light-receiving element are integrated. The anode of the light-emitting diode Dp is connected via a terminal T21 to the output terminal Tout+ and the cathode is connected via a terminal T22 to the secondary control circuit 133.

The amount of current flowing into the light-emitting diode Dp of the photocoupler 114 is controlled according to the detected voltage. Accordingly, the light-emitting diode Dp emits an amount of light corresponding to the detected voltage. The light emitted from the light-emitting diode Dp enters the phototransistor Qp.

The collector of the phototransistor Qp draws an amount of current corresponding to the amount of received light from the primary control circuit 124. The collector of the phototransistor Qp of the photocoupler 114 is connected via a terminal T11 to the primary control circuit 124 and the emitter is connected via a terminal T12 to ground.

The breakdown element 115 is connected between the terminals T11 and T12 to which the collector and the emitter of the phototransistor Qp are connected.

The breakdown element 115 comprises a breakdown Zener diode and is provided as a separate electronic component near the photocoupler 114. The cathode of the breakdown element 115 is connected to the terminal T11 connected to the collector of the phototransistor Qp of the photocoupler 114 and the anode of the breakdown element 115 is connected to the terminal T12 connected to the emitter of the phototransistor Qp of the photocoupler 114.

The breakdown Zener diode, for example, has a withstand voltage of about 35 V. When an applied voltage reaches or exceeds 35 V, the breakdown Zener diode breaks down and, as a result, its cathode and anode short-circuit. In this case, the withstand voltage of the phototransistor Qp of the photocoupler 114 is, for example, set at about 50 V. In other words, the breakdown voltage of the breakdown Zener diode is lower than that of the phototransistor Qp of the photocoupler 114.

For example, when the alternating voltage applied to the input terminals Tin+ and Tin- changes and the voltage applied to the phototransistor Qp of the photocoupler 114 increases, the breakdown element 115 breaks down and short-circuits before the applied voltage reaches the withstand voltage of the phototransistor Qp. Short-circuiting the breakdown element 115 decreases the voltage applied to the phototransistor Qp and thereby prevents breakdown of the phototransistor Qp. This in turn prevents breakdown of the photocoupler 114.

Thus, according to this embodiment, breakdown of the photocoupler 114 is prevented by the breakdown element 115.

Thus, the above embodiment makes it possible to prevent breakdown of the photocoupler 114 resulting from, for example, supply voltage surge by just connecting the breakdown element 115 in parallel with the phototransistor Qp of the photocoupler 114. In other words, the above embodiment makes it possible to prevent breakdown of the photocoupler 114 with a simple configuration.

In the above embodiment, the breakdown element 115 is connected between the collector and emitter of the phototransistor Qp of the photocoupler 114 which phototransistor Qp is closer to the power supply than the light-emitting diode Dp. Alternatively, the breakdown element 115 may be connected between the anode and cathode of the light-emitting diode Dp to prevent breakdown of the light-emitting diode Dp.

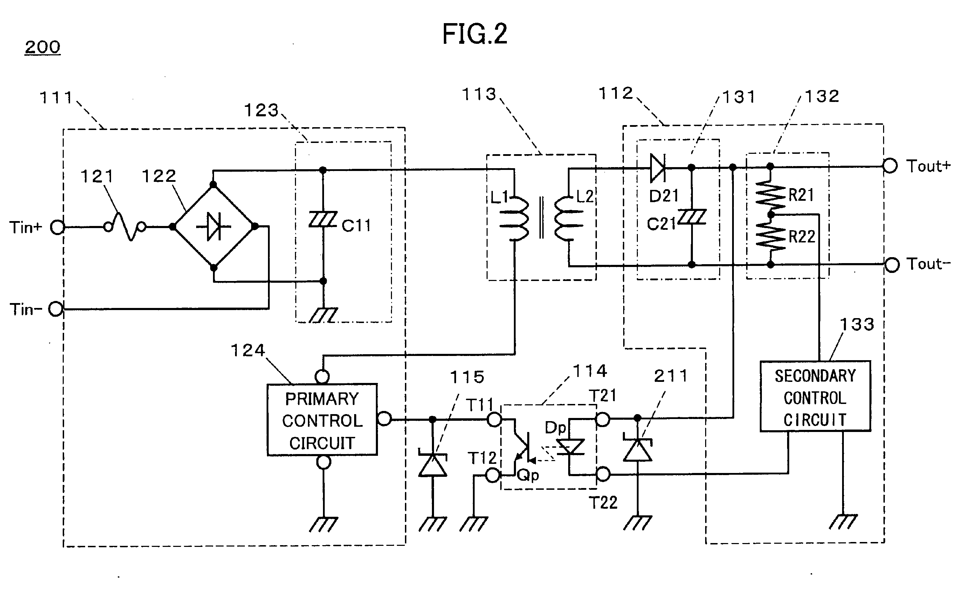

FIG. 2 is a circuit diagram illustrating a power supply circuit according to another embodiment of the present invention. In FIG. 2, components corresponding to those shown in FIG. 1 are assigned the same reference numbers and descriptions of those components are omitted here.

In a power supply circuit 200 of this embodiment, a breakdown element 211 is connected between the anode and cathode of the photodiode Dp of the photocoupler 114, in other words, between the terminals T21 and T22. The breakdown element 211 comprises a breakdown Zener diode and is provided as a separate electronic component near the photocoupler 114. The cathode of the breakdown element 211 is connected to the terminal T21 connected to the anode of the light-emitting diode Dp of the photocoupler 114 and the anode of the breakdown element 211 is connected to the terminal T22 connected to the cathode of the light-emitting diode Dp of the photocoupler 114.

The breakdown voltage of the breakdown element 211 is lower than that of the light-emitting diode Dp of the photocoupler 114. In other words, the breakdown element 211 breaks down and short-circuits before the applied voltage reaches the breakdown voltage of the light-emitting diode Dp.

Thus, this embodiment makes it possible to prevent breakdown of the light-emitting diode Dp resulting from an overvoltage and thereby to prevent breakdown of the photocoupler 114.

The present invention is not limited to the specifically disclosed embodiments, and variations and modifications may be made without departing from the scope of the present invention.

## Claims

1. A power supply circuit, comprising:
a transformer including a primary coil and a secondary coil;
a primary circuit connected to the primary coil;
a secondary circuit connected to the secondary coil;
a photocoupler including a light-receiving element and a light-emitting element, the photocoupler coupling the primary circuit and the secondary circuit; and
a breakdown element connected in parallel with the light-receiving element or the light-emitting element; wherein
the breakdown element is configured to break down at or above a first voltage that is lower than a second voltage at or above which the light-receiving element or the light-emitting element breaks down and thereby to cause a short-circuit between terminals of the light-receiving element or the light-emitting element.

2. The power supply circuit as claimed in claim 1, wherein the breakdown element comprises a breakdown Zener diode.

3. The power supply circuit as claimed in claim 1 or 2, wherein
the light-emitting element of the photocoupler is connected to the secondary circuit and the light-receiving element of the photocoupler is connected to the primary circuit; and
the breakdown element is connected in parallel with the light-receiving element.

4. The power supply circuit as claimed in any one of claims 1 through 3, wherein
the photocoupler is implemented as a component where the light-receiving element and the light-emitting element are integrated; and
the breakdown element is a component provided separately from the photocoupler.
